(19) Europäisches Patentamt
European Patent Office
Office européen des brevets

(11) **EP 4 734 159 A1**

(12) **EUROPEAN PATENT APPLICATION**
published in accordance with Art. 153(4) EPC

(43) Date of publication:
29.04.2026  Bulletin 2026/18

(21) Application number: 24863163.2

(22) Date of filing: 03.09.2024

(51) International Patent Classification (IPC):
*H01M 4/04* (2006.01)     *G06Q 50/04* (2012.01)
*G01B 7/004* (2006.01)     *B65H 35/00* (2006.01)

(52) Cooperative Patent Classification (CPC):
B65H 35/00; G01B 7/004; G06Q 50/04; H01M 4/04;
Y02E 60/10; Y02P 70/50

(86) International application number:
PCT/KR2024/013262

(87) International publication number:
WO 2025/053582 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.09.2023  KR 20230119245

(71) Applicant: LG Energy Solution, Ltd.
Seoul 07335 (KR)

(72) Inventors:
• JO, Eun Ji
  Daejeon 34122 (KR)

• KIM, Min Su
  Daejeon 34122 (KR)
• PARK, Jong Seok
  Daejeon 34122 (KR)
• HUH, Seung
  Daejeon 34122 (KR)
• KIM, June Hee
  Daejeon 34122 (KR)
• SIM, Min Kyu
  Daejeon 34122 (KR)

(74) Representative: BCKIP Part mbB
MK1
Landsbergerstraße 98, 3.Stock
80339 München (DE)

(54) **SECONDARY BATTERY MANUFACTURING SYSTEM AND SECONDARY BATTERY MANUFACTURING METHOD**

(57)    Example embodiments provide a secondary battery manufacturing system. The system includes a positive electrode cutter configured to cut a positive electrode sheet wound from a positive electrode roll to provide a plurality of positive electrodes, a negative electrode cutter configured to cut a negative electrode sheet wound from a negative electrode roll to provide a plurality of negative electrodes, an electrode identifier (ID) reader configured to sense an electrode ID of a negative electrode tab of each of the plurality of negative electrodes to generate an electrode ID sensing signal, and a controller configured to collect coordinate-related electrode ID data based on a first input amount of the positive electrode sheet, a second input amount of the negative electrode sheet, and the electrode ID sensing signal.

**Description**

[Technical Field]

The present invention relates to a secondary battery manufacturing system and a secondary battery manufacturing method. The present application claims the benefit of priority based on Korean Patent Application No. 10-2023-0119245, filed on September 7, 2023, and the entire contents of the Korean patent application is incorporated herein by reference.

[Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.
A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulation material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Disclosure]

[Technical Problem]

The present invention is directed to providing a secondary battery manufacturing system and method capable of retrieving history data of the manufacture of electrodes.

[Technical Solution]

Embodiments of the present invention provide a secondary battery manufacturing system. The system includes a positive electrode cutter configured to cut a positive electrode sheet wound from a positive electrode roll to provide a plurality of positive electrodes, a negative electrode cutter configured to cut a negative electrode sheet wound from a negative electrode roll to provide a plurality of negative electrodes, an electrode identifier (ID) reader configured to sense an electrode ID of a negative electrode tab of each of the plurality of negative electrodes to generate an electrode ID sensing signal, and a controller configured to collect coordinate-related electrode ID data based on a first input amount of the positive electrode sheet, a second input amount of the negative electrode sheet, and the electrode ID sensing signal.
The first input amount of the positive electrode sheet may be determined based on a cut count of the positive electrode cutter, and the second input amount of the negative electrode sheet may be determined based on a cut count of the negative electrode cutter.
The first input amount of the positive electrode sheet may be calculated based on a pitch of the plurality of positive electrodes and the cut count of the positive electrode cutter, and the second input amount of the negative electrode sheet may be calculated based on a pitch of the plurality of negative electrodes and the cut count of the negative electrode cutter.
The system may further include a first encoder configured to generate a first input amount signal indicating the first input amount of the positive electrode sheet, and a second encoder configured to generate a second input amount signal indicating the second input amount of the negative electrode sheet.
The coordinate-related electrode ID data may include the electrode ID and a coordinate of the positive electrode matching the electrode ID.
The coordinate-related electrode ID data may include the electrode ID and a coordinate of the negative electrode matching the electrode ID.
The system may further include a server configured to store the coordinate-related electrode ID data.
The server may be configured to store a roll map of the positive electrode roll for manufacturing the positive electrode roll, and a roll map of the negative electrode roll for manufacturing the negative electrode roll.
The server may be configured to match the roll map of the positive electrode roll and the roll map of the negative electrode roll to the electrode ID.

Example embodiments provide a secondary battery manufacturing method. The method includes cutting a positive electrode sheet and a negative electrode sheet to form a plurality of positive electrodes and a plurality of negative electrodes, coupling the plurality of positive electrodes and the plurality of negative electrodes, and collecting coordinate-related electrode ID data, in which each of the plurality of negative electrodes includes a negative electrode tab including an electrode ID, and the coordinate-related electrode ID data includes the electrode ID and a coordinate of the positive electrode matching the electrode ID.

The coordinate-related electrode ID data may include the electrode ID and coordinates of the negative electrode matching the electrode ID.

The coordinate-related electrode ID data may be collected based on a first input amount of the positive electrode sheet, a second input amount of the negative electrode sheet, and an electrode ID sensing signal, and the electrode ID sensing signal may be generated based on sensing of the electrode ID.

The first input amount of the positive electrode sheet may be determined based on a cut count of a positive electrode cutter configured to cut the positive electrode sheet, and the second input amount of the negative electrode sheet may be determined based on a cut count of the negative electrode cutter to cut the negative electrode sheet.

The first input amount of the positive electrode sheet may be calculated based on a pitch of the plurality of positive electrodes and the cut count of the positive electrode cutter, and the second input amount of the negative electrode sheet may be calculated based on a pitch of the plurality of negative electrodes and the cut count of the negative electrode cutter.

The first input amount of the positive electrode sheet may be determined by a first input signal generated by a first encoder configured to sense an amount of rotation of a positive electrode unwinder configured to unwind the positive electrode sheet, and the second input amount of the negative electrode sheet may be determined by a second input signal generated by a second encoder configured to sense an amount of rotation of a negative electrode unwinder configured to unwind the negative electrode sheet.

[Advantageous Effects]

According to example embodiments of the present invention, the traceability between a roll map produced in an electrode process and an intermediate product such as a mono-cell can be improved. Accordingly, the reliability of the manufacture of a secondary battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrates a secondary battery manufacturing system according to example embodiments.

FIG. 2 illustrates a secondary battery manufacturing system according to example embodiments.

FIG. 3 illustrates relative positions of elements with respect to a positive electrode sheet ESP.

FIG. 4 illustrates relative positions of elements with respect to a negative electrode sheet ESN.

FIG. 5 is a flowchart of a secondary battery manufacturing method according to example embodiments.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

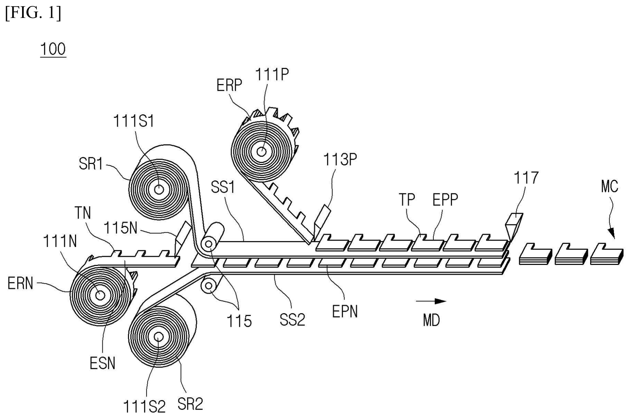

FIG. 1 illustrates a secondary battery manufacturing system 100 according to example embodiments.

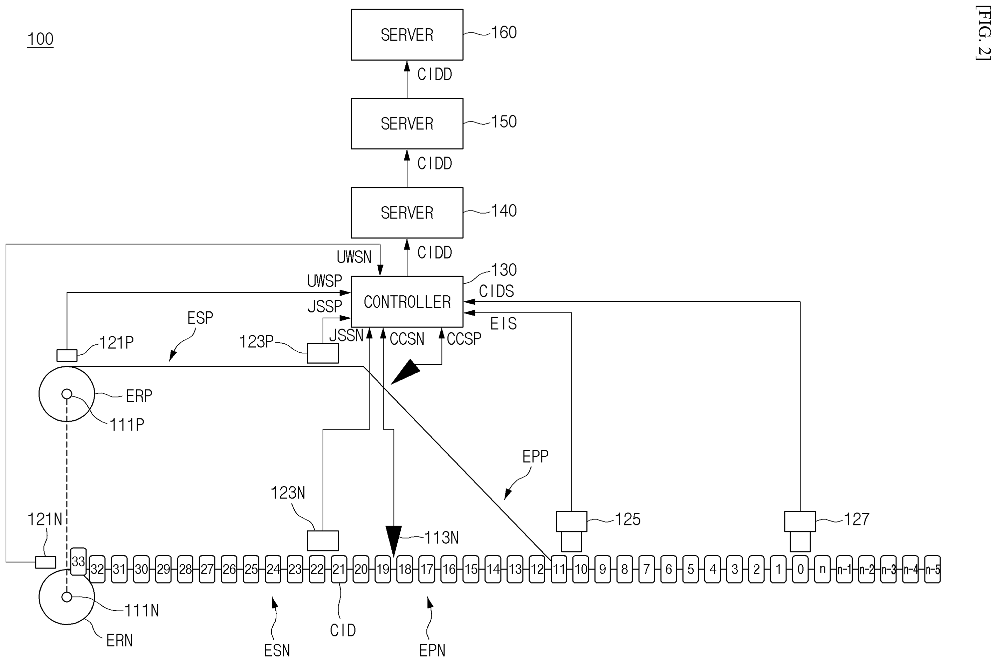

FIG. 2 illustrates the secondary battery manufacturing system 100 according to example embodiments.

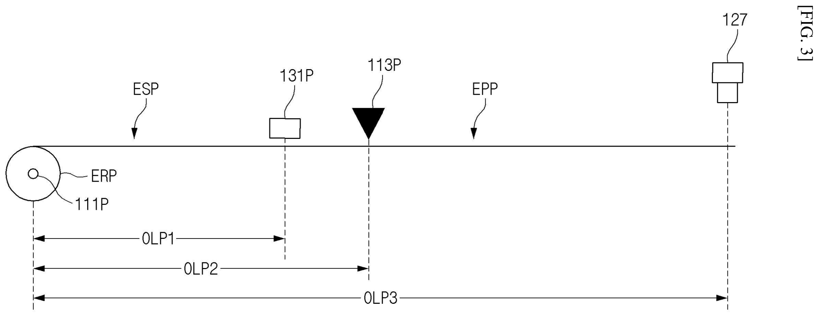

FIG. 3 illustrates relative positions of elements with respect to a positive electrode sheet ESP.

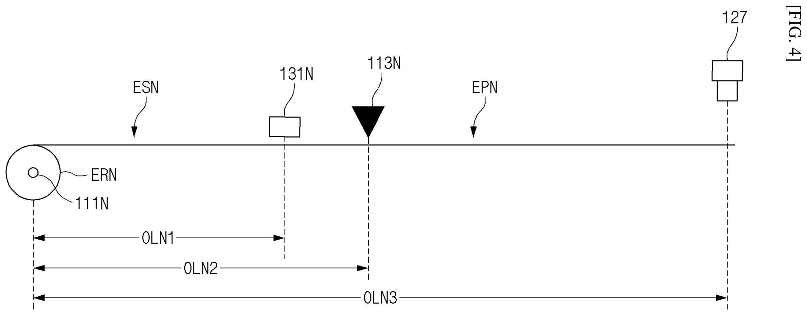

FIG. 4 illustrates relative positions of elements with respect to a negative electrode sheet ESN.

Referring to FIGS. 1 to 4, the secondary battery manufacturing system 100 may include a positive electrode unwinder 111P, a negative electrode unwinder 111N, separator unwinders 111S1 and 111S2, electrode cutters 113P and 113N, guide rolls 115, a separator cutter 117, encoders 121P and 121N, joint sensors 123P and 123N, an electrode gap sensor 125, an electrode identifier (ID) reader 127, a controller 130, and servers 140, 150, and 160.

The secondary battery manufacturing system 100 may be configured to perform, for example, a lamination and stacking process. Mono-cells MC may be provided as a result of the lamination process. Each of the mono-cells MC may include a positive electrode EPP, a negative electrode EPN, and separators. In the stacking process, the mono-cells MC and additional half-cells may be stacked in a vertical direction to provide an electrode assembly.

The unwinders 111P, 111N, 111S1, and 111 S2 may be configured to put roll-type materials into the secondary battery manufacturing system 100. More specifically, the unwinder 111P may be configured to unwind the positive electrode sheet ESP from a positive electrode roll ERP, the unwinder 111N may be configured to unwind the negative electrode sheet ESN from a negative electrode roll ERN, and the separator unwinders 111S1 and 111S2 may be configured to unwind separator sheets SS1 and SS2 from separator rolls SR1 and SR2.

The positive electrode roll ERP and the negative electrode roll ERN may be provided through a series of battery manufacturing processes. For example, the positive electrode roll ERP and the negative electrode roll ERN may be provided by the coating process, the roll pressing process, a selective slitting process, and the notching process.

The coating process is a process of applying a coating material such as an electrode slurry to an electrode sheet. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES, which is coated with the electrode slurry, between pressing rolls facing each other. By using the pressing rolls, a surface of an electrode may be planarized and a bonding force between the active material and a current collector may be increased.

The coating process and the roll pressing process are performed on a wide electrode sheet to enhance the production (e.g., GWh) per line of secondary battery production equipment. Thereafter, in the slitting process, the wide electrode sheet may be cut according to the specifications of a battery cell. The slitting process may be omitted according to the specifications of the battery cell.

In the notching process, tabs may be formed on the electrode sheet, and a V-shaped groove may be formed to cut the electrode sheet as needed. In the notching process, positive electrode tabs TP and negative electrode tabs TN may be formed. In the notching process, an electrode ID CID may be provided to the negative electrode tabs TN. The electrode ID CID may be formed by a method such as laser printing or ink printing. Accordingly, each of the negative electrode tabs TN may include the electrode ID CID. Unlike the negative electrode tabs TN, the positive electrode tabs TP may not be assigned an electrode ID CID to prevent a defect.

However, the present invention is not limited thereto, and the electrode ID CID may include symbols indicating sequence numbers of the negative electrode tabs TN. The symbols of the electrode ID CID may include Arabic numerals but are not limited thereto. The symbols of the electrode ID CID may include arbitrary characters providing information about the sequence numbers of the negative electrode tabs TN.

A positive electrode cutter 113P may be configured to cut the positive electrode sheet ESP. A plurality of positive electrodes EPP may be provided by cutting the positive electrode sheet ESP. The negative electrode cutter 113N may be configured to cut the negative electrode sheet ESN. A plurality of negative electrodes EPN may be provided by cutting the negative electrode sheet ESN.

The controller 130 may control operations of the positive electrode cutter 113P and the negative electrode cutter 113N as will be described below and thus may be configured to count cuts of the positive electrode sheet ESP by the positive electrode cutter 113P and cuts of the negative electrode sheet ESN by the negative electrode cutter 113N. For example, the controller 130 may be configured to receive a first cut count signal CCSP from the positive electrode cutter 113P and a second cut count signal CCSN from the negative electrode cutter 113P.

The guide rolls 115 may be configured to define a path of the separator sheets SS1 and SS2. The separator sheets SS1 and SS2 may be aligned side by side by the guide rolls 115. The positive electrodes EPP and the negative electrodes EPN may be on the separator sheets SS1 and SS2. For example, the negative electrodes EPN may be on the separator sheet SS2, and the positive electrodes EPP may be on the separator sheet SS1. The positive electrodes EPP and the negative electrodes EPN may be electrically and physically separated by the separator sheet SS1.

The separator cutter 117 may be configured to cut the separator sheets SS1 and SS2. Before the separator sheets SS1 and SS2 are cut by the separator cutter 117, a stacked structure of the separator sheets SS1 and SS2, the positive electrodes EPP, and the negative electrodes EPN may be pressed by a nip roll (not shown) or the like. By cutting the separator sheets SS1 and SS2, a mono-cell MC including the positive electrodes EPP, the negative electrodes EPN, and separators may be provided.

The encoder 121P may be configured to sense an amount of rotation of the unwinder 111P. The encoder 121P may be configured to sense an amount of the positive electrode sheet ESP unwound from the positive electrode roll ERP by the unwinder 111P. Accordingly, the encoder 121P may be configured to generate a first input amount signal UWSP indicating a length of the positive electrode sheet ESP unwound by the unwinder 111P (i.e., an input amount of the positive electrode sheet ESP). The encoder 121P may be configured to transmit the first input amount signal UWSP to the controller 130.

The encoder 121N may be configured to sense an amount of rotation of the unwinder 111N. The encoder 121N may be configured to sense an amount of the negative electrode sheet ESN unwound from the negative electrode roll ERN by the unwinder 111N. Accordingly, the encoder 121N may be configured to generate a second input amount signal UWSN indicating a length of the negative electrode sheet ESN unwound by the unwinder 111N (i.e., an input amount of the negative electrode sheet ESN). The encoder 121N may be configured to transmit the second input amount signal UWSN to the controller 130.

The first joint sensor 123P may be configured to sense a joint of the positive electrode sheet ESP. Here, the positive electrode sheet ESP may include joints when the positive electrode roll ERP is replaced with another (i.e., when a subsequent positive electrode roll ERP is loaded on the unwinder 111P), when an electrode is broken in a current process (i.e., during processing of the positive electrode sheet ESP by the secondary battery manufacturing system 100), or when the electrode was broken in a previous process (i.e., during processing of the positive electrode roll ERP before being loaded on the unwinder 111P).

The first joint sensor 123P may be, for example, a color sensor but is not limited thereto. The first joint sensor 123P may be configured to generate a first joint sensing signal JSSP. The first joint sensing signal JSSP may be transmitted to the controller 130.

The second joint sensor 123N may be configured to sense a joint of the negative electrode sheet ESN. Here, the negative electrode sheet ESN may include joints when the negative electrode roll ERN is replaced with another (i.e., a subsequent negative electrode roll ERN is loaded on the unwinder 111N), when an electrode is broken in a current process (i.e., during processing of the negative electrode sheet ESN by the secondary battery manufacturing system 100), or when the electrode was broken in a previous process (i.e., during processing of the negative electrode roll ERN before being loaded on the unwinder 111N).

The second joint sensor 123N may be, for example, a color sensor but is not limited thereto. The second joint sensor 123N may be configured to generate a second joint sensing signal JSSN. The second joint sensing signal JSSN may be transmitted to the controller 130.

The electrode gap sensor 125 may be configured to sense gaps between the positive electrodes EPP and the negative electrodes EPN. For example, the electrode gap sensor 125 may be configured to sense gaps between the positive electrodes EPP. As another example, the electrode gap sensor 125 may be configured to sense gaps between the negative electrodes EPN. As another example, the electrode gap sensor 125 may be configured to sense gaps between positive electrodes EPP and gaps between negative electrodes EPN.

The electrode gap sensor 125 may be configured to generate a gap sensing signal ISS. The electrode gap sensor 125 may be configured to transmit the gap sensing signal ISS to the controller 130.

The electrode ID reader 127 may be configured to sense an electrode ID CID. The electrode ID reader 127 may be configured to read a sequence number indicated by the electrode ID CID. The electrode ID reader 127 may be, for example, a bar code reader (BCR) but is not limited thereto. The electrode ID reader 127 may be an optical character reader (OCR). The electrode ID reader 127 may be configured to generate an electrode ID sensing signal CIDS based on the sensing of the electrode ID CID. The electrode ID reader 127 may be configured to transmit the electrode ID sensing signal CIDS to the controller 130.

The controller 130 may be configured to control elements, e.g., the unwinders 111P, 111N, 111S1, and 111S2, the positive electrode cutter 113P, the negative electrode cutter 113N, and the separator cutter 117, of the secondary battery manufacturing system 100.

The controller 130 may be in operative communication with the encoders 121P and 121N, the joint sensors 123P and 123N, the electrode gap sensor 125, the electrode ID reader 127 through a wired or wireless data network. The data network may be unidirectional or bidirectional. The data network may be implemented by a physical channel, WiFi, public networks and/or specialized networks using Bluetooth or other frequency bands.. The encoders 121P and 121N, the joint sensors 123P and 123N, the electrode gap sensor 125, and the electrode ID reader 127 may be configured to collect data from equipment, a workpiece, an intermediate product, and a product in the secondary battery manufacturing system 100 or generate a signal for collecting data therefrom.

As a non-limiting example, the controller 130 may be a programmable logic controller (PLC). The PLC is a special type of microprocessor-based controller that stores instructions using a programmable memory and implements functions such as logic, sequencing, timing, counting and arithmetic operations to control machines and processes. It is easy to operate and program the PLC.

The controller 130 may include a power supply, a CPU, an input interface, an output interface, a communication interface, and memory devices. For an operation of the controller 130, power may be supplied to other elements of the controller 130, such as the CPU, the input interface, the output interface, the communication interface, and the memory devices. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through the output module. The communication interface may be configured to transmit and receive data between the controller 130 and the server 140.

However, embodiments are not limited thereto, and the controller 130 may include one of a simple controller, a complex processor such as a microprocessor, a CPU or a GPU, a processor configured by software, dedicated hardware, and firmware. The controller 130 may be implemented, for example, by a general-purpose computer or application-specific hardware such as a digital signal process (DSP), a field-programmable gate array (FPGA) or an application-specific integrated circuit (ASIC).

Cutting may be performed by the positive electrode cutter 113P and the negative electrode cutter 113N, based on a pitch that is a regular repetition unit. The pitch may be a minimum unit length by which the same shape or structure is repeated, similar to a machine-direction length between positive electrode tabs TP of neighboring positive electrodes EEP. Because the positive electrode sheet ESP is cut to substantially the same target length, an input amount of the positive electrode sheet ESP may be proportional to a cut count of the positive electrode cutter 513P (e.g., a cut count signal CCSP). Likewise, because the negative electrode sheet ESN is cut to substantially the same target length, an input amount of the negative electrode sheet ESN may be proportional to a cut count of the negative electrode cutter 513N (e.g., a cut count signal CCSN).

More specifically, as shown in Equation 1, the input amount of the positive electrode sheet ESP may be the sum of the product of a cut count Cutcount_P and a pitch Pitch_P and an offset length OLP1. Here, the offset length OLP2 may be a length of the positive electrode sheet ESP between the unwinder 111P and the positive electrode cutter 113P.

[Equation 1]

$$\text{Input amount\_P} = \text{OLP2} + (\text{Pitch\_P}) \times (\text{Cutcount\_P})$$

Similarly, as shown in Equation 2, the input amount of the negative electrode sheet ESN may be the sum of the product of a cut count Cutcount_N and a pitch Pitch_N and an offset length OLN2. Here, the offset length OLN2 may be a length of the negative electrode sheet ESN between the unwinder 111N and the negative electrode cutter 113N.

[Equation 2]

$$\text{Input amount\_N} = \text{OLN2} + (\text{Pitch\_N}) \times (\text{Cutcount\_N})$$

As another example, the input amount of the positive electrode sheet ESP may be determined from the first input amount signal UWSP of the encoder 121P, and the input amount of the negative electrode sheet ESN may be determined from the second input amount signal UWSN of the encoder 121N.

The input amount of the positive electrode sheet ESP may indicate a relative position of a part of the positive electrode sheet ESP, which is unwound by the unwinder 111P, on the positive electrode sheet ESP. The controller 130 may be configured to determine a coordinate of an event occurring on the positive electrode sheet ESP based on the input amount of the positive electrode sheet ESP and offset lengths OLP1, OLP2, and OLP3. The controller 130 may be configured to determine a coordinate of an event occurring on the negative electrode sheet ESN based on an input amount of the negative electrode sheet ESN and offset lengths OLN1, OLN2, and OLN3.

For example, a coordinate of a part of the positive electrode sheet ESP sensed by the joint sensor 121P (i.e., a coordinate on the positive electrode sheet ESP derived from the joint sensing signal JSSP) may be determined by performing an arithmetic operation (e.g., addition or subtraction) on the input amount of the positive electrode sheet ESP and the offset length OLP1. The offset length OLP1 may be a length of the positive electrode sheet ESP between the unwinder 111P and a part of the positive electrode sheet ESP sensed by the joint sensor 121P.

For example, a coordinate of a part of the positive electrode sheet ESP cut by the positive electrode cutter 113P may be determined by performing an arithmetic operation (e.g., addition or subtraction) on the input amount of the positive electrode sheet ESP and the offset length OLP2. The offset length OLP2 may be a length of the positive electrode sheet ESP between the unwinder 111P and a part of the positive electrode sheet ESP cut by the positive electrode cutter 113P.

For example, a coordinate (e.g., a conversion coordinate or an equivalent coordinate) of a positive electrode EPP coupled to a negative electrode EPN sensed by the electrode ID reader 127 may be determined by performing an arithmetic operation (e.g., addition or subtraction) on the input amount of the positive electrode sheet ESP and the offset length OLP3. The offset length OLP3 may be a length (e.g., a conversion length or equivalent length) of the positive electrode sheet ESP between the unwinder 111P and the positive electrode EPP coupled to the negative electrode EPN sensed by the electrode ID reader 127.

In this case, there are positive electrodes EPP between the positive electrode cutter 113P and the electrode ID reader 127 rather than the positive electrode sheet ESP. Therefore, the offset length OLP3 may not be the length of an actual positive electrode sheet ESP but may be an equivalent length calculated based on a cut count of the positive electrode cutter 113P or determined from the first input amount signal UWSP.

The input amount of the negative electrode sheet ESN may indicate a relative position of a part of the negative electrode sheet ESN, which is unwound by the unwinder 111N, on the negative electrode sheet ESN. A coordinate of an event occurring on the negative electrode sheet ESN may be determined based on an input amount of the negative electrode sheet ESN.

For example, a coordinate of a part of the negative electrode sheet ESN sensed by the joint sensor 121N (i.e., a coordinate on the negative electrode sheet ESN derived from the joint sensing signal JSSN) may be determined by performing an arithmetic operation (e.g., addition or subtraction) on the input amount of the negative electrode sheet ESN and the offset length OLN1. The offset length OLN1 may be a length of the negative electrode sheet ESN between the unwinder 111N and a part of the negative electrode sheet ESN sensed by the joint sensor 121N.

For example, a coordinate of a part of the negative electrode sheet ESN cut by the negative electrode cutter 113N may be determined by performing an arithmetic operation (e.g., addition or subtraction) on the input amount of the negative electrode sheet ESN and the offset length OLN2. The offset length OLN2 may be a length of the negative electrode sheet ESN between the unwinder 111N and a part of the negative electrode sheet ESN cut by the negative electrode cutter 113N.

For example, a coordinate (e.g., a conversion coordinate or an equivalent coordinate) of a negative electrode EPN sensed by the electrode ID reader 127 may be determined by performing an arithmetic operation (e.g., addition or subtraction) on the input amount of the negative electrode sheet ESN and the offset length OLN3. The offset length OLN3 may be a length (e.g., a conversion length or equivalent length) of the negative electrode sheet ESN between the unwinder 111N and the negative electrode EPN sensed by the electrode ID reader 127.

In this case, there are negative electrodes EPN between the negative electrode cutter 113N and the electrode ID reader 127 rather than the negative electrode sheet ESN. Therefore, the offset length OLN3 may not be the length of an actual negative electrode sheet ESN but may be an equivalent length calculated based on a cut count of the negative electrode cutter 113N or determined from the second input amount signal UWSN.

Coordinates on the positive electrode sheet ESP may be matched to parts of the positive electrode sheet ESP. That is, arbitrary points on the positive electrode sheet ESP may have coordinates. The coordinates may be one-dimensional (1D) quantities in a machine direction MD (or a longitudinal direction) of a sheet material SM but is not limited thereto. The coordinates may be two-dimensional (2D) quantities in the machine direction MD and a transverse direction TD (or a width direction) of the positive electrode sheet ESP.

Coordinates on the negative electrode sheet ESN may be matched to parts of the negative electrode sheet ESN. That is, arbitrary points on the negative electrode sheet ESN may have coordinates. The coordinates may be one-dimensional (1D) quantities in a machine direction MD (or a longitudinal direction) of a sheet material SM but is not limited thereto. The coordinates may be two-dimensional (2D) quantities in the machine direction MD and a transverse direction TD (or a width direction) of the negative electrode sheet ESN.

The controller 130 may be configured to collect coordinate-related electrode ID data CIDD based on the electrode ID sensing signal EIDS, the input amount of the positive electrode sheet ESP, and the input amount of the negative electrode sheet ESN. As described above, the input amount of the positive electrode sheet ESP may be calculated based on a cut count of the positive electrode cutter 113P or be determined by the first input amount signal UWSP. As described above, the input amount of the negative electrode sheet ESN may be calculated based on a cut count of the negative electrode cutter 113N or be determined by the second input amount signal UWSN.

According to example embodiments, the controller 130 may be configured to determine a coordinate of the positive electrode EPP coupled to the negative electrode EPN sensed by the electrode ID reader 127 by performing an arithmetic operation on the input amount of the positive electrode sheet ESP and the offset length OLP3. The controller 130 may be configured to match the coordinate of the positive electrode EPP coupled to the negative electrode EPN sensed by the electrode ID reader 127 to the electrode ID sensing signal CIDS.

According to example embodiments, the controller 130 may be configured to determine a coordinate of the negative electrode EPN sensed by the electrode ID reader 127 by performing an arithmetic operation on the input amount of the negative electrode sheet ESN and the offset length OLN3. The controller 130 may be configured to match the coordinate of the negative electrode EPN sensed by the electrode ID reader 127 to the electrode ID sensing signal CIDS.

Here, the coordinate of the negative electrode EPN may be a start or end coordinate of the negative electrode EPN or a coordinate of a negative electrode tab TN. The coordinate of the negative electrode EPN may include at least two among the start and end coordinates of the negative electrode EPN and the coordinate of the negative electrode tab TN. The coordinate of the positive electrode EPP may be a start or end coordinate of the positive electrode EPP or a coordinate of a part of the positive electrode EPP overlapping the negative electrode tab TN. Alternatively, the coordinate of the positive electrode EPP may include at least two among the start and end coordinates of the positive electrode EPP and the coordinate of the part of the positive electrode EPP overlapping the negative electrode tab TN.

To match the electrode ID CID, a coordinate of the positive electrode sheet ESP and a coordinate of the negative electrode sheet ESN, a lot number of the positive electrode roll ERP from which the positive electrode sheet ESP is unwound and a lot number of the negative electrode roll ERN from which the negative electrode sheet ESN is unwound should be determined. The joint sensing signal JSSP and the joint sensing signal JSSN may be used to identify a lot. According to example embodiments, the controller 130 may update the lot numbers of the positive electrode roll ERP and the negative electrode roll ERN, based on the joint sensing signal JSSP and the joint sensing signal JSSN. Accordingly, the coordinate of the negative electrode sheet ESN and the coordinate of the positive electrode sheet ESP may be reset based on the joint sensing signal JSSP and the joint sensing signal JSSN.

The offset length OLP1 and the offset length OLN1 may be used to update the lot numbers and reset the coordinate of the negative electrode sheet ESN and the coordinate of the positive electrode sheet ESP. Here, the offset length OLP1 may be a length of the positive electrode sheet ESP between the unwinder 111P and the joint sensor 121P. Here, the offset length OLN1 may be a length of the negative electrode sheet ESN between the unwinder 111N and the joint sensor 121N.

More specifically, when a new positive electrode roll ERP is loaded on the unwinder 111P, the new positive electrode roll ERP should be connected to a remaining positive electrode sheet ESP of a previous lot using joints to continue the roll-to-roll process. For example, it may be determined that a part of the positive electrode sheet ESP following a joint of the positive electrode sheet ESP sensed first after loading a positive electrode roll ERP of a new lot on the unwinder 111P has been unwound from the newly loaded positive electrode roll ERP. Accordingly, when the joint sensing signal JSSP is generated after the loading of the new positive electrode roll ERP, the controller 130 may be configured to match the electrode ID CID to a coordinate of a positive electrode sheet ESP of a subsequent lot. An electrode ID CID of each of the negative electrodes EPN coupled to the positive electrodes EPP may be allocated to another lot based on loading of the positive electrode roll ERP and sensing of a joint.

Similarly, when a new negative electrode roll ERN is loaded on the unwinder 111N, the new negative electrode roll ERN should be connected to a remaining negative electrode sheet ESN of a previous lot using joints to continue the roll-to-roll process. For example, it may be determined that a part of the negative electrode sheet ESN following a joint of the negative electrode sheet ESN sensed first after loading a negative electrode roll ERN of a new lot on the unwinder 111N has been unwound from the newly loaded negative electrode roll ERN. Accordingly, when the joint sensing signal JSSN is generated after the loading of the new negative electrode roll ERN, the controller 130 may be configured to match the electrode ID CID to a coordinate of a negative electrode sheet ESN of a subsequent lot. The electrode ID CID of each of the negative electrodes EPN may be allocated to another lot based on loading of the negative electrode roll ERN and sensing of a joint.

The coordinate-related electrode ID data CIDD may include the electrode ID CID of the negative electrode EPN, the coordinate of the positive electrode sheet ESP matching the electrode ID CID of the negative electrode EPN, and the coordinate of the negative electrode sheet ESN.

The server 140 may be configured to relay communication between the controller 130 and the server 150. The server 140 may be a communication server. A language and protocol of the server 150 may be different from a language and protocol of the controller 130. For example, the language of the server 150 may be SQL, and the language of the controller 130 may be a ladder diagram. In addition, the server 140 may be configured to convert data, e.g., the coordinate-related electrode ID data CIDD, collected by the controller 130 into the language of the server 150 and record the converted data in a database of the server 150.

The server 150 may be configured to store the coordinate-related electrode ID data CIDD. The server 150 may be configured to process the coordinate-related electrode ID data CIDD. The server 150 may be configured to transmit the coordinate-related electrode ID data CIDD to the server 160. The server 160 may be, for example, a data warehouse, and store the coordinate-related electrode ID data CIDD for a long time based on a quality guarantee period of a product or the like. Accordingly, a manufacturing process of the product can be tracked according to a life cycle of the product.

Furthermore, the server 160 may provide matching between roll maps of a preceding process (e.g., an electrode process) of the positive electrode roll ERP and roll maps of a preceding process of the negative electrode roll ERN, and the electrode ID CID. The server 160 is a data warehouse and thus may include history data (i.e., roll maps) for the manufacture of the positive electrode roll ERP and history data (i.e., roll maps) for the manufacture of the negative electrode roll ERN.

Here, the roll maps may represent a process event of the positive electrode sheet ESP and the negative electrode sheet ESN based on coordinates indicating positions on the positive electrode sheet ESP and the negative electrode sheet ESN. As described above, a a secondary battery manufacturing process may be performed on the positive electrode sheet ESP and the negative electrode sheet ESN.

The roll maps may include event data indicating events of the roll-to-roll process of the electrode sheets ESP and ESN. Generally, the event data is generated according to the progress of a process and thus is time series data. Accordingly, data of process events may include values indicating the events and time values matched thereto. The time series data may be temporally ordered. Temporal ordering is a main feature of time series data, and is organizing events in an order in which the events occur and arrive to be processed. That is, the time series data may be stored based on a point in time when an event occurs (i.e., when inspection and measurement are performed or when an action of a process is performed), and the event may be matched to time values.

The roll maps may indicate a history of processes performed on the positive electrode sheet ESP and the negative electrode sheet ESN and include data related to coordinates. Accordingly, the roll maps enable feedback, feedforward, and tracking of a secondary battery manufacturing process.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., the positive electrode sheet ESP and the negative electrode sheet ESN on which the coating process, the roll press process, and the slitting process are performed. The intermediate product may be cut separators, electrodes, or an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. In the roll maps, time series data such as measurement data may be related to coordinate data based on the amount of movement (i.e., the amount of input or the amount of exhaustion) of each of the positive electrode sheet ESP and the negative electrode sheet ESN. The roll maps may allow time series data to be related with coordinate data including coordinates of the positions on workpieces, the components, the intermediate products, and the products of the real-world. Accordingly, feedforward based on generation of the roll map and the roll map may improve the productivity and quality of a process by digitizing and objectifying aspects of the process that depend on an operator's discretion.

Furthermore, as described below, roll maps may be cumulatively generated for workpieces, intermediate products, and products of unit processes to track process history of products (e.g., battery cells, battery modules, or battery packs) on the market. The mono-cells MC may include the electrode ID CID on the negative electrode tabs TN, and the server 150 may include lot numbers and coordinates of the positive electrodes and the negative electrodes that are included in the mono-cells MC matching the electrode ID CID. In other words, the positive electrodes EPP and the negative electrodes EPN that are included in the battery cell may be related to a roll map using the electrode ID CID. Accordingly, when an event such as a quality issue occurs in already shipped mono-cells MC (or a battery cell including the mono-cells MC), the history of collective data of the manufacture of the mono-cells MC may be retrieved based on an electrode ID.

Roll maps may be generated in units of lots. A lot is a production unit of the roll-to-roll process, and the positive electrode roll ERP and the negative electrode roll ERN that are loaded on the unwinders 111P and 111N are examples of the lot. Thus, the server 160 may be configured to store the roll maps of the positive electrode roll ERP and the negative electrode roll ERN.

The servers 140, 150 and 160 may be implemented by hardware, firmware, software, or a combination thereof. For example, the servers 140, 150 and 160 may include a computing device such as a workstation computer, a desktop computer, a laptop computer, or a tablet computer. The servers 140, 150 and 160 may include a simple controller, a complex processor such as a microprocessor, a CPU, or a GPU, a processor configured by software, dedicated hardware, or firmware. The servers 140, 150 and 160 may be implemented, for example, by a general-purpose computer or application-specific hardware such as a digital signal processor (DSP), a field-programmable gate array (FPGA) or an application-specific integrated circuit (ASIC).

The servers 140, 150, and 160 may include a physical server or a cloud server. The servers 140, 150 and 160 may provide data and an analysis result to an operator through various frameworks. A framework may include a protocol that supports data transmission so that a client device may visualize data through a user interface and provide updated visualization when new data is calculated by the servers 220 and 230. The protocol supporting data transmission may include HTML, JavaScript, and/or JSON.

The servers 140, 150 and 160 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, operations of The servers 140, 150 and 160 may be implemented by instructions stored in a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The servers 140, 150 and 160 may include firmware, software, routines, and instructions for performing the above-described operation, or a process described below. For example, the servers 140, 150 and 160 may be instantiated in a memory.

However, the instantiation of the servers 140, 150 and 160 in the memory is only an example provided for convenience of description, and the operations of the servers 140, 150 and 160 may be caused by a computing device, distributed computing devices, a processor, or other types of devices for execution of firmware, software, routines, and instructions.

The secondary battery manufacturing system 10 may implement a plug-in architecture together with an API for obtaining data to provide plug-and-play connection of the encoders 121P and 121N, the joint sensors 123P and 123N, the electrode gap sensor 125, and the electrode ID reader 127. Accordingly, resources in a certain process step and a specific site can be easily transferred to a different process and a different site or new resources can be easily introduced into each process step and each site.

A data network between the components of the secondary battery manufacturing system 10 may include various types of communication channels, including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards. Those of ordinary skill in the art would be able to easily derive the secondary battery manufacturing system 100 that includes an integrated server that performs functions of the servers 150 and 160, based on the above description.

(Second Embodiment: Method)

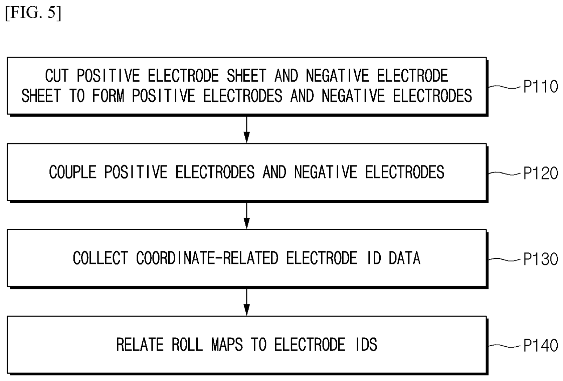

FIG. 5 is a flowchart of a secondary battery manufacturing method according to example embodiments.

Referring to FIGS. 1, 2, and 5, in P110, a positive electrode sheet EPS and a negative electrode sheet EPS may be cut to form a plurality of positive electrodes EPP and a plurality of negative electrodes EPN. The plurality of positive electrodes EPP may be cut to a substantially constant pitch by the positive electrode cutter 113P. The plurality of negative electrodes EPN may be cut to a substantially constant pitch by the negative electrode cutter 113N. Each of the plurality of positive electrodes EPP may include a positive electrode tab TP, and each of the plurality of negative electrodes EPN may include a negative electrode tab TN.

Next, in P120, the plurality of positive electrodes EPP and the plurality of negative electrodes EPN may be coupled to each other. The plurality of positive electrodes EPP and the plurality of negative electrodes EPN may be coupled together with the separator sheets SS1 and SS2 to prevent a short circuit. The plurality of positive electrodes EPP, the plurality of negative electrodes EPN, and the separator sheets SS1 and SS2 may be pressed by a nip roll. A mono-cell MC may be provided by cutting the separator sheets SS1 and SS2 by the separator cutter 117.

Next, in P130, coordinate-related electrode ID data CIDD may be collected. The coordinate-related electrode ID data CIDD may be collected by matching coordinates of the plurality of the positive electrodes EPP and coordinates of the plurality of negative electrodes EPN to an electrode ID CID. The coordinate-related electrode ID data CIDD may be collected by the controller 130 and stored in the servers 150 and 160.

Next, in P140, roll maps may be related to electrode IDs of the negative electrodes EPN. The roll maps may be produced in an electrode process (i.e., coating, roll pressing, and selective slitting) and the notching process for the manufacture of a positive electrode roll ERP and a negative electrode roll ERN. The electrode ID CID may match a coordinate of the positive electrode sheet ESP and a coordinate of the negative electrode sheet ESN. The roll maps allow coordinate-based retrieval, and thus, a subsequent-battery-cell assembly process using the mono-cell MC, an activation process, and an electrode process and an assembly process performed on shipped battery cells based on the electrode ID CID can be tracked.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

**Claims**

1. A secondary battery manufacturing system comprising:
   a positive electrode cutter configured to cut a positive electrode sheet wound from a positive electrode roll to provide a plurality of positive electrodes;

   a negative electrode cutter configured to cut a negative electrode sheet wound from a negative electrode roll to provide a plurality of negative electrodes;
   an electrode identifier ID reader configured to sense an electrode ID of a negative electrode tab of each of the plurality of negative electrodes to generate an electrode ID sensing signal; and
   a controller configured to collect coordinate-related electrode ID data based on a first input amount of the positive electrode sheet, a second input amount of the negative electrode sheet, and the electrode ID sensing signal.

2. The secondary battery manufacturing system of claim 1, wherein

   the first input amount of the positive electrode sheet is determined based on a cut count of the positive electrode cutter, and
   the second input amount of the negative electrode sheet is determined based on a cut count of the negative electrode cutter.

3. The secondary battery manufacturing system of claim 2, wherein

   the first input amount of the positive electrode sheet is calculated based on a pitch of the plurality of positive electrodes and the cut count of the positive electrode cutter, and
   the second input amount of the negative electrode sheet is calculated based on a pitch of the plurality of negative electrodes and the cut count of the negative electrode cutter.

4. The secondary battery manufacturing system of claim 1, further comprising:

   a first encoder configured to generate a first input amount signal indicating the first input amount of the positive electrode sheet; and
   a second encoder configured to generate a second input amount signal indicating the second input amount of the negative electrode sheet.

5. The secondary battery manufacturing system of claim 1, wherein
   the coordinate-related electrode ID data includes the electrode ID and a coordinate of the positive electrode matching the electrode ID.

**6.** The secondary battery manufacturing system of claim 1, wherein
the coordinate-related electrode ID data includes the electrode ID and a coordinate of the negative electrode matching the electrode ID.

**7.** The secondary battery manufacturing system of claim 1, further comprising
a server configured to store the coordinate-related electrode ID data.

**8.** The secondary battery manufacturing system of claim 7, wherein
the server is configured to store a roll map of the positive electrode roll for manufacturing the positive electrode roll, and a roll map of the negative electrode roll for manufacturing the negative electrode roll.

**9.** The secondary battery manufacturing system of claim 8, wherein
the server is configured to match the roll map of the positive electrode roll and the roll map of the negative electrode roll to the electrode ID.

**10.** A secondary battery manufacturing method comprising:

cutting a positive electrode sheet and a negative electrode sheet to form a plurality of positive electrodes and a plurality of negative electrodes;
coupling the plurality of positive electrodes and the plurality of negative electrodes; and
collecting coordinate-related electrode identifier ID data,
wherein each of the plurality of negative electrodes includes a negative electrode tab including an electrode ID, and
the coordinate-related electrode ID data includes the electrode ID and a coordinate of the positive electrode matching the electrode ID.

**11.** The secondary battery manufacturing method of claim 10, wherein
the coordinate-related electrode ID data includes the electrode ID and a coordinate of the negative electrode matching the electrode ID.

**12.** The secondary battery manufacturing method of claim 10, wherein

the coordinate-related electrode ID data is collected based on a first input amount of the positive electrode sheet, a second input amount of the negative electrode sheet, and an electrode ID sensing signal, and
the electrode ID sensing signal is generated based on sensing of the electrode ID.

**13.** The secondary battery manufacturing method of claim 12, wherein

the first input amount of the positive electrode sheet is determined based on a cut count of a positive electrode cutter configured to cut the positive electrode sheet, and
the second input amount of the negative electrode sheet is determined based on a cut count of a negative electrode cutter to cut the negative electrode sheet.

**14.** The secondary battery manufacturing method of claim 13, wherein

the first input amount of the positive electrode sheet is calculated based on a pitch of the plurality of positive electrodes and the cut count of the positive electrode cutter, and
the second input amount of the negative electrode sheet is calculated based on a pitch of the plurality of negative electrodes and the cut count of the negative electrode cutter.

**15.** The secondary battery manufacturing method of claim 12, wherein

the first input amount of the positive electrode sheet is determined by a first input signal generated by a first encoder configured to sense an amount of rotation of a positive electrode unwinder configured to unwind the positive electrode sheet, and
the second input amount of the negative electrode sheet is determined by a second input signal generated by a second encoder configured to sense an amount of rotation of a negative electrode unwinder configured to unwind the negative electrode sheet.

[FIG. 1]

<u>100</u>

[FIG. 2]

EP 4 734 159 A1

[FIG. 3]

ESP

ERP

111P

131P

113P

EPP

127

OLP1

OLP2

OLP3

[FIG. 4]

[FIG. 5]

```
┌─────────────────────────────────────────────────────────┐
│  CUT POSITIVE ELECTRODE SHEET AND NEGATIVE ELECTRODE     │
│  SHEET TO FORM POSITIVE ELECTRODES AND NEGATIVE ELECTRODES│ ⌇ P110
└─────────────────────────────────────────────────────────┘
                           │
                           ▼
┌─────────────────────────────────────────────────────────┐
│       COUPLE POSITIVE ELECTRODES AND NEGATIVE ELECTRODES  │ ⌇ P120
└─────────────────────────────────────────────────────────┘
                           │
                           ▼
┌─────────────────────────────────────────────────────────┐
│         COLLECT COORDINATE-RELATED ELECTRODE ID DATA      │ ⌇ P130
└─────────────────────────────────────────────────────────┘
                           │
                           ▼
┌─────────────────────────────────────────────────────────┐
│              RELATE ROLL MAPS TO ELECTRODE IDS            │ ⌇ P140
└─────────────────────────────────────────────────────────┘
```

## INTERNATIONAL SEARCH REPORT

| International application No. |
| --- |
| **PCT/KR2024/013262** |

| A. | CLASSIFICATION OF SUBJECT MATTER |
| --- | --- |

**H01M 4/04**(2006.01)i; **G06Q 50/04**(2012.01)i; **G01B 7/004**(2006.01)i; **B65H 35/00**(2006.01)i

According to International Patent Classification (IPC) or to both national classification and IPC

| B. | FIELDS SEARCHED |
| --- | --- |

Minimum documentation searched (classification system followed by classification symbols)

H01M 4/04(2006.01); B05C 11/10(2006.01); B23D 15/04(2006.01); B23D 15/14(2006.01); H01M 10/04(2006.01); H01M 10/48(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 커터(cutter), 음극 탭(anode tab), 전극 아이디 (electrode ID), 리더(reader), 좌표 데이터(coordinate data), 컨트롤러(controller), 서버(server)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2017-0114351 A (LG CHEM, LTD.) 16 October 2017 (2017-10-16)<br>See claim 1; paragraphs [0057], [0085], [0088]-[0090] and [0093]; and figure 1. | 1-15 |
| A | JP 2017-045534 A (TOYOTA INDUSTRIES CORP.) 02 March 2017 (2017-03-02)<br>See paragraphs [0027]-[0029]; and figures 1 and 2. | 1-15 |
| A | KR 10-2022-0134303 A (LG ENERGY SOLUTION, LTD.) 05 October 2022 (2022-10-05)<br>See claims 1-20. | 1-15 |
| A | KR 10-2022-0039264 A (LG ELECTRONICS INC.) 29 March 2022 (2022-03-29)<br>See claims 1-16. | 1-15 |
| A | CN 101015867 A (HANGZHOU WANMA HIGH-ENERGY BATTERY CO., LTD.) 15 August 2007 (2007-08-15)<br>See claims 1-5; and figure 1. | 1-15 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 December 2024** | **10 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| KR | 10-2017-0114351 | A | 16 October 2017 | KR | 10-2114811 | B1 | 25 May 2020 |
| JP | 2017-045534 | A | 02 March 2017 | JP | 6661918 | B2 | 11 March 2020 |
| KR | 10-2022-0134303 | A | 05 October 2022 | CN | 115917776 | A | 04 April 2023 |
| | | | | EP | 4156317 | A1 | 29 March 2023 |
| | | | | KR | 10-2623933 | B1 | 11 January 2024 |
| | | | | US | 2023-0251752 | A1 | 10 August 2023 |
| | | | | WO | 2022-203252 | A1 | 29 September 2022 |
| KR | 10-2022-0039264 | A | 29 March 2022 | EP | 4220811 | A1 | 02 August 2023 |
| | | | | KR | 10-2627519 | B1 | 23 January 2024 |
| | | | | WO | 2022-065717 | A1 | 31 March 2022 |
| CN | 101015867 | A | 15 August 2007 | CN | 100413623 | C | 27 August 2008 |

Form PCT/ISA/210 (patent family annex) (July 2022)

**EP 4 734 159 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230119245